Europäisches Patentamt

European Patent Office

Office européen des brevets

(11) Veröffentlichungsnummer: **0 313 102 B1**

# (12) EUROPÄISCHE PATENTSCHRIFT

(45) Veröffentlichungstag der Patentschrift: **01.04.92**

(21) Anmeldenummer: **88118485.7**

(22) Anmeldetag: **15.01.87**

(60) Veröffentlichungsnummer der früheren
Anmeldung nach Art. 76 EPÜ: **0 239 723**

(51) Int. Cl.⁵: **E02B  15/04**, B63B 35/32

(54) **Schiff zur Bekämpfung von öl-Verschmutzungen.**

(30) Priorität: **11.03.86 DE 8606579 U**

(43) Veröffentlichungstag der Anmeldung:
**26.04.89 Patentblatt  89/17**

(45) Bekanntmachung des Hinweises auf die
Patenterteilung:
**01.04.92 Patentblatt  92/14**

(84) Benannte Vertragsstaaten:
**AT BE CH DE ES FR GB IT LI NL SE**

(56) Entgegenhaltungen:
**DE-A- 2 931 795**
**DE-A- 3 206 188**
**DE-A- 3 329 196**
**US-A- 3 517 812**

(73) Patentinhaber: **Blohm  +  Voss international
GmbH
Hermann-Blohm-Strasse 3
W-2000 Hamburg 1(DE)**

(72) Erfinder: **Münte, Harm-Hinrich, Dipl.-Ing.
Gartenstrasse 13A
W-2057 Reinbek(DE)**
Erfinder: **Lindemann, Peter, Dipl.-Ing.
Volksdorfer Grenzweg 52
W-2000 Hamburg 67(DE)**

(74) Vertreter: **Richter, Werdermann & Gerbaulet
Neuer Wall 10
W-2000 Hamburg 36(DE)**

**Beschreibung**

Die Erfindung betrifft ein Schiff zur Bekämpfung von Öl-Verschmutzungen mit Einrichtungen zum Aufnehmen von auf Wasser schwimmendem Öl und zur Trennung von Öl und Wasser des aufgenommenen Öl-Wasser-Gemisches, wobei in der Schiffsaußenhaut des Schiffskörpers mindestens eine Aufnahmeöffnung für das Öl-Wasser-Gemisch ausgebildet ist, die mit den im Schiffskörper angeordneten Einrichtungen zum Trennen des Öl-Wasser-Gemisches verbunden ist

Spezielle Ölbekämpfgungs-Fahrzeuge,insbesondere Wasserfahrzeuge, die ausschließlich für den Katastrophen-Fall vorbehalten werden, sind in der Regel nur schwer wirtschaftlich zu betreiben. Deshalb werden oftmals Mehrzweck-Fahrzeuge eingesetzt, die nicht nur für die Bekämpfung von Öl-Verschmutzungen, sondern überwiegend für andere wichtige Aufgaben vorgesehen sind. Im wesentlichen sind dies Feuerlöschboote,Tonnenleger,Bagger- und Küstenschutz-Fahrzeuge sowie Versorger und Kleintanker.

Derartige Ölbekämpfungs-Wasserfahrzeuge weisen im Innenraum ihres Schiffskörpers eine Separations-Einrichtung auf, mit der das angesogene Öl-Wasser-Gemisch voneinander getrennt wird. Das separierte Öl wird in vorgesehene Tanks geleitet, während das aus der Separation erhaltene Wasser direkt wieder nach außenbords gegeben wird.

Bekannt sind ferner Einrichtungen zum Aufnehmen von auf Wasser schwimmendem Öl mittels beweglicher überströmter Wehre. Mittels dieser Wehre werden die Einströmöffnungen in der Außenhaut eines Schiffes für das Öl-Wasser-Gemisch derart eingestellt, daß möglichst nur der Ölfilm und wenig Wasser in den Innenraum des Schiffskörpers einströmen können. Das in den Innenraum des Schiffskörpers geleitete und sich dort ansammelnde Öl-Wasser-Gemisch wird mittels Pumpen und anderen entsprechenden Einrichtungen getrennt.

Eine derartige Einrichtung zum Separieren des Öl-Wasser-Gemisches besteht darin, daß im Innenraum des Schiffskörpers eine mit der fensterförmigen, im Bereich der Wasseroberfläche liegenden Einströmöffnung in der Schiffsaußenhaut und mit der Außenluft in Verbindung stehende Vorkammer und eine dieser nachgeschaltete, bodenseitig über einen Ansaugstutzen mit der Vorkammer verbundene, unter Unterdruck stehende Hauptkammer ausgebildet sind, die in ihrem, der Vorkammer abgekehrten Endbereich eine Ölabsaugpumpe mit im oberen Hauptkammerbereich liegenden Ansaugstutzen und eine Wasserabsaugpumpe mit im bodenseitigen Hauptkammerbereich liegenden Ansaugstutzen aufweist, wobei die beiden Pumpen mit einer Förderleistungsregeleinrichtung zur Aufrechterhaltung eines Flüssigkeitsspiegels in der Vorkammer zwischen der Unterkante der Einströmöffnung und der Oberkante des die beiden Kammern verbindenden Ansaugstutzens verbunden sind (DE-A-29 31 795).

Nach der DE-A-3 329 196 ist eine Ölauffangvorrichtung zum Einbau in dazu hergestellten Schiffen sowie in vorhandenen Öltankern bekannt, die aus runden Eisenpontons besteht, die am Vorderende eine Fuge und am Hinterende einen Zapfen aufweisen und die durch Verbolzen miteinander verbunden werden, wobei die Befestigung vermittels starker Haltebolzen, die an einer Bordverstärkung befestigt sind, an der Back- und der Steuerbordseite des Ölraumschiffes angebracht sind. Dabei bestehen die Pontons aus drei verschiedenen Einheiten, nämlich einem Kupplungsponton, einem Standardponton als Mittelponton und einem Außenponton, an dem ein Außenschwimmer befestigt ist. Die Mittelpontons haben gleiche Maße; sie können je nach der Seestärke und dem Wellengang ein- oder ausgebaut werden, um die Ölförderbreite zu verkürzen oder zu verbreitern. Ein mit dieser Ölauffangvorrichtung versehenes Schiff soll eine kompakte Ölauffangeinheit darstellen, da das Schiff ohne Hilfsschiffe im Einsatzgebiet arbeiten kann. Dabei kann in den Pontons ein Maschinenraum eingebaut sein, in dem ein Elektromotor mit einem Getriebe ein Schaufelwerk oder ein Förderband mit Schaufeln antreibt, um das Öl zum Schiffsrumpf zu drücken, in dem eine Öffnung zu den Filtern und Pumpenanlagen eingelassen ist, wo das Öl vom Wasser getrennt wird. Hierbei ist jedoch keine an der Schiffsaußenhaut angeordnete und verschwenkbare Leitwand zur Führung des Öl-Wasser-Gemisches zu der in der Schiffsaußenhaut ausgebildeten Aufnahme- und Einströmöffnung vorgesehen.

Eine weitere Ölauffangvorrichtung zur Beseitigung von Ölteppichen auf See und anderen Gewässern ist durch die DE-A-32 06 188 bekannt. Diese Ölauffangvorrichtung ist durch ein in beliebige Tanker eingebautes Ölauffanggeschirr gekennzeichnet, das aus zwei kabelgesteuerten Schwimmkörpern, fest verbunden mit einer elastischen, schalenförmigen Auffangvorrichtung, besteht. Durch die gleichmäßige Vorwärtsbewegung von Tanker und Schwimmkörper gelangt das aufzufangende Öl in den Vorspiekraum und kann dann von dort in die Tanks im Schiffskörperinnenraum gepumpt werden. Das mit eingedrungene Seewasser gelangt durch einen Bodenfilter in eine Bodenwanne bzw. in einen Ballasttank und kann von dort wieder abgepumpt werden. Seitlich auskragende, mit einem Abschnitt in das Wasser eintauchende und verschwenkbare Leitwände, über die das aufzunehmende Öl in eine Öl-Wasser-Gemisch-Aufnahmeöffnung in der Außenhaut des Schiffskörpers geleitet wird, sind hier nicht vorgesehen.

Die Erfindung löst die Aufgabe, ein Schiff der eingangs genannten Art zu schaffen, mit dem ein einwandfreies Leiten des aufzunehmenden Öl-Wasser-Gemisches in die in der Schiffsaußenhaut ausgebildete Aufnahme- und Einströmöffnung auch bei einem Schlingern des Schiffes und auch bei Wellengang gewährleistet ist, wobei darüber hinaus ein schnelles Verbinden der das Öl-Wasser-Gemisch leitenden Einrichtung an der Schiffsaußenhaut möglich sein soll.

Diese Aufgabe wird durch die im Patentanspruch 1 gekennzeichneten Merkmale gelöst

Eine derart ausgebildete Leitwand ist vermittels der Verbindungsvorrichtung mühelos mit der Leitklappe verbindbar. Auch bei bewegter See und rollendem Schiff ist ein selbsttätiges Lösen der Verbindungsvorrichtung nicht möglich, da das Verbinden und Lösen nur durch Überführen der Leitwand in eine Winkelstellung möglich ist, die der Winkelstellung der Verriegelungsnocken entspricht, denn nur in der angehobenen Stellung der Leitwand nehmen die schlitzförmigen Einführdurchbrechungen im Anschlußabschnitt der Leitwand die dem Winkel der Verriegelungsnocken entsprechenden Winkel ein, so daß nur dann die Verriegelungsnocken aus den Einführdurchbrechungen beim Abziehen der Leitwand von der Leitklappe herausgleiten können.

Zum mühelosen und schnellen Verbinden der Leitwand mit der Leitklappe ist vorgesehen, daß jede schlitzförmige, mit der Verriegelungsnockenaufnahmedurchbrechung verbundene Durchbrechung zum Einführen des Verriegelungsnockens von einer oberen Wandfläche und einer unteren Wandfläche begrenzt wird, wobei die beiden Wandflächen als konisch sich zu der Vorderkante der Wände der Leitwand erweiternde Gleitflächen ausgebildet sind. Aufgrund dieser Ausgestaltung ist ein schnelles Einführen des Verriegelungsnockens in die Verriegelungsnockenaufnahmedurchbrechung gewährleistet.

Um ein einwandfreies Verschwenken der Leitwand um ihre waagerechte Anlenkungsachse an der Leitklappe zu gewährleisten, ist jeder Verriegelungsnocken an seinen Enden kreisbogenförmig abgerundet ausgebildet, wobei sich die beiden kreisbogenförmigen Endabschnitte zu einem Kreis ergänzen, dessen Durchmesser dem Durchmesser der Verriegelungsnockenaufnahmedurchbrechung entspricht. Für den Fall, daß eine Winkelstellung des Verriegelungsnockens oder der Verriegelungsnocken erforderlich ist, sieht die Erfindung vor, daß jeder Verriegelungsnocken an der Seitenwand der Leitklappe um eine waagerechte Achse verschwenkbar angeordnet und mittels einer hydraulisch, pneumatisch oder elektromotorisch betriebenen Antriebsvorrichtung in verschiedene Winkelstellungen verstellbar und in den eingestellten Winkelstellungen mittels Feststelleinrichtungen arretierbar ist.

Um auch bei bewegter See bzw. höherem Wellengang zu verhindern, daß die Leitwand mit einem Bereich aus dem Wasser gehoben wird und dadurch die Leitfunktion der Leitwand beeinträchtigt wird, ist die Leitwandfläche vergrößerbar. Hierzu ist die Leitwand doppelwandig ausgebildet und obenseitig und/oder untenseitig mit einem mittels einer hydraulisch,pneumatisch oder elektromotorisch betriebenen Antriebsvorrichtung ein- und ausfahrbaren, sich über die gesamte Länge der Leitwand erstreckenden Wandabschnitt versehen. Auch kann die Leitwand im Anschlußbereich der Leitklappe gegenüber ihrem Endbereich eine größere Höhe aufweisen.

Weitere vorteilhafte Ausgestaltungen der Erfindung gehen aus den Unteransprüchen hervor.

Im folgenden wird der Gegenstand der Erfindung in den Zeichnungen erläutert Es zeigt

Fig 1 in einer schaubildlichen Ansicht ein Schiff mit seitlich an dem Schiffskörper angelenkten Leitwänden,

Fig. 2 in einer schaubildlichen Ansicht einen Abschnit des Schiffskörpers mit im Innenraum des Schiffskörpers angeordneter Einrichtung zum Trennen von Öl und Wasser des aufgenommenen Öl-Wasser-Gemisches mit teilweise entfernter Außenhaut und Querschott,

Fig 3 eine Seitenansicht einer an der Leitklappe angeschlossenen Leitwand,

Fig 4 in einer Ansicht von oben die an die Leitklappe angeschlossene Leitwand,

Fig. 5 in einer Seitenansicht die am Schiffskörper angelenkte und um eine senkrechte Achse verschwenkbare Leitklappe mit an dieser angeordneten Verriegelungsnocken,

Fig. 6 in einer vergrößerten Seitenansicht die aus dem Verriegelungsnocken und der Verriegelungsnockenaufnahmedurchbrechung bestehende Verbindungsvorrichtung für die Leitwand und die Leitklappe und

Fig. 7 in einer Seitenansicht eine weitere Ausführungsform der Leitwand.

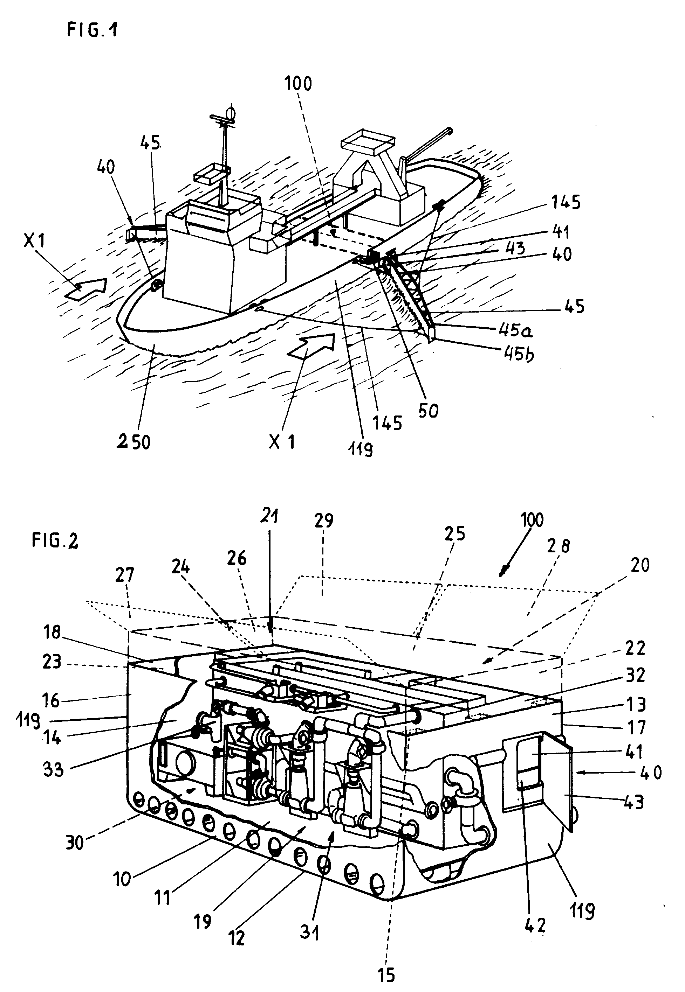

In Fig 1 ist mit 250 ein Schiff bezeichnet, dessen Schiffskörper Einrichtungen zum Aufnehmen von auf Wasser schwimmendem Öl und zur Trennung von Öl und Wasser des aufgenommenen Öl-Wasser-Gemisches aufweist, wobei in der Schiffsaußenhaut des Schiffskörpers mindestens eine Aufnahme- bzw. Einströmöffnung 41 vorgesehen ist.

Die in Fig. 2 dargestellte und mit 100 bezeichnete Einrichtung zum Trennen des Öl-Wasser-Gemisches besteht z.B. aus einem Raumkörper, der von Bodenwrangen 10 mit einem Innenboden 11 und einer Bodenbeplattung 12 gebildet ist und aus einer Anzahl von Versteifungen 15 und einer Seitenbeplattung 13,14 besteht. Mit 16,17 sind Querschotten bezeichnet. Der Innenraum des Raumkörpers ist bei 19 angedeutet; mit 119 ist die Schiffsaußenhaut bezeichnet.

Der Innenraum 19 des Raumkörpers ist mittels einer waagerechten, zwischendeckartig ausgebildeten Trennwand 18 in einen oberen Raum 20 und in einen unteren Raum 30 unterteilt, wobei der obere Raum 20 gegenüber dem unteren Raum 30 eine geringere Höhe aufweist und zur Aufnahme von Öl-Leitwänden 45 dient, während der untere Raum 30 zur Aufnahme einer Einrichtung 31 zur Separation eines in den Separationsraum 30 einströmenden Öl-Wasser-Gemisches dient.

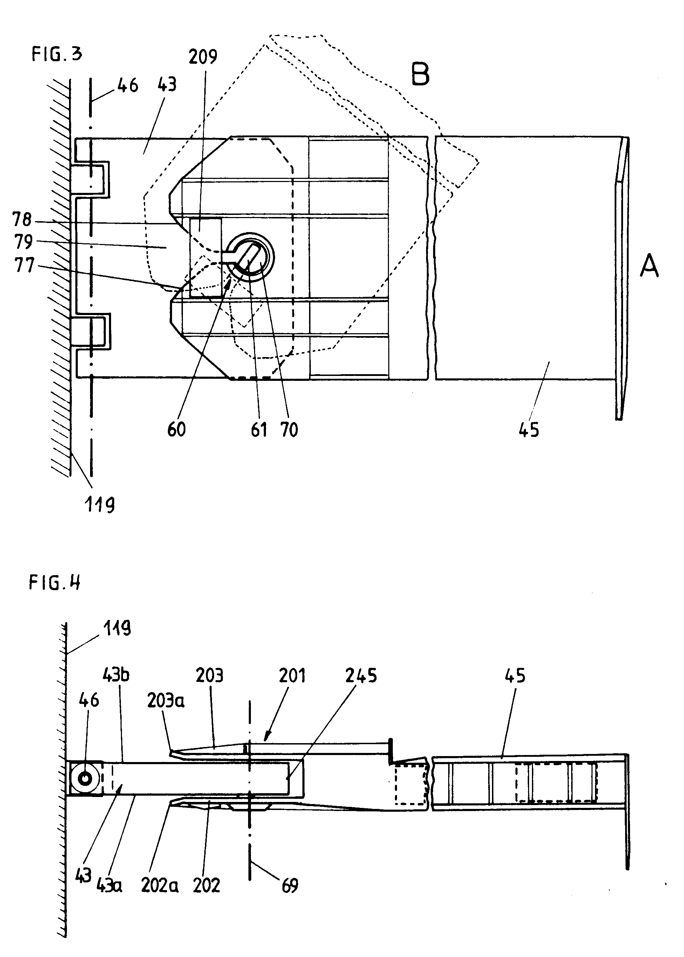

Die obere Öffnung 21 des wannenförmig ausgebildeten Aufnahmeraumes 20 für die Öl-Leitwände 45 ist verschließbar ausgebildet. Die den Aufnahmeraum 20 begrenzenden Seitenwände sind in Fig. 2 mit 22,23,24,25 bezeichnet. An den oberen Rändern der sich gegenüberliegenden Seitenwände 23,25 sind Decksplatten 26,27,28,29 scharnierartig angelenkt, die in Pfeilrichtung X verschwenkbar sind, um die Öffnung 21 des Aufnahmeraumes 20 verschließen zu können (Fig. 1 und 2). Die Anzahl der die Öffnung 21 des Aufnahmeraumes 20 verschließenden Decksplatten 26 bis 29 richtet sich jeweils nach der Größe des Raumkörpers der Einrichtung 100 und der auszubildenden Decksfläche. Bei dem in Fig 3 gezeigten Ausführungsbeispiel wird die Öffnung 21 des Aufnahmeraumes 20 mittels vier Decksplatten 26,27,28,29 verschlossen

Der untere Raum 30 des Raumkörpers, der den Separationsraum darstellt, nimmt die Einrichtung 31 zur Separation des einströmenden Öl-Wasser-Gemisches auf. Diese Separationseinrichtung 31 ist in an sich bekannter Weise ausgebildet und dient zur Trennung des Wassers und des Öls des einströmenden Öl-Wasser-Gemisches.

Zu beiden Seiten des Raumkörpers sind im Bereich der Seitenbeplattung 13,14, also in der Schiffsaußenhaut, Öl-Aufnahmevorrichtungen 40 vorgesehen, die spiegelbildlich ausgebildet sind, wobei jedoch auch nur einseitig der Raumkörper mit einer Öl-Aufnahmevorrichtung 40 versehen sein kann

Die Öl-Aufnahmevorrichtung 40 besteht aus einer in der von den Seitenbeplattungen 13,14 ausgebildeten Außenhaut vorgesehenen Aufnahme- bzw. Einströmöffnung 41 für das Öl-Wasser-Gemisch. Da beide Öl-Aufnahmevorrichtungen 40 gleich bzw. spiegelbildlich ausgebildet sind, wird nachstehend die in Fig. 2 gezeigte Öl-Aufnahmevorrichtung beschrieben.

Im Bereich der Aufnahme- und Einströmöffnung 41 für das Öl-Wasser-Gemisch ist ein Wehrschieber 42 angeordnet, der hydraulisch oder elektromotorisch betätigbar ist, jedoch auch andersartig ausgebildete Betätigungseinrichtungen können Verwendung finden. Bei Inbetriebnahme der Einrichtung 100 wird der Wehrschieber 42 mit seiner Oberkante so eingestellt, daß das auf dem Wasser schwimmende Öl mit einer möglichst geringen Menge Wasser in die Aufnahmeöffnung 41 einströmen kann. Je nach Dicke der Ölschicht und seegangsbedingtem Stand des Wasserspiegels und nach Tiefgangsänderung des Schiffes wird der Wehrschieber 42 verstellt.

Des weiteren umfaßt die Öl-Aufnahmevorrichtung 40 eine Öl-Leitklappe 43, die im Bereich der Aufnahmeöffnung 41 angeordnet und um eine senkrechte Achse verschwenkbar ist (Fig.2). Die Verschwenkbarkeit dieser Öl-Leitklappe 43 erfolgt mittels in der Zeichnung nicht dargestellter Antriebseinrichtungen. Diese Öl-Leitklappe 43 übernimmt die Zuführung des Öls und bei Inbetriebnahme der Einrichtung 100 wird die Öl-Leitklappe 43 in die in Fig. 2 gezeigte Stellung verschwenkt. Bei Bedarf ist die Öl-Leitklappe 43 durch eine Öl-Leitwand 45 verlängert, wobei jedoch auch andersartig ausgebildete Vorrichtungen zur Anwendung gelangen können, wobei jedoch alle diese Vorrichtungen so ausgebildet sein müssen, daß das aufzunehmende Öl entlang der Vorrichtung in Richtung zur Öl-Leitklappe 43 und somit in die Aufnahmeöffnung 41 strömen kann.

Bei dem in Fig. 1 gezeigten Ausführungsbeispiel ist die Öl-Leitklappe 43 durch eine Öl-Leitwand 45 verlängert, die senkrechtstehend und gelenkig und Öldicht mit der Leitklappe 43 verbunden ist, wobei die Öl-Leitwand 45 and der Leitklappe 43 derart angelenkt ist, daß die Öl-Leitwand 45 um eine waagerechte Achse verschwenkbar ist, wobei das Verschwenken der eine größere Länge aufweisenden Öl-Leitwand 45 um die senkrechte Achse, z.B. mit Trossen 145, erfolgt, die mit in der Zeichnung nicht dargestellten Seil- bzw. Deckswinden verbunden sein können (Fig.1). Sowohl die Öl-Leitklappe 43 als auch die Öl-Leitwand 45 weisen dann zur Längsachse des Schiffskörpers des in Fig. 1 dargestellten Schiffes 150 eine Winkelstellung auf, aufgrund der das Öl, und zwar entlang der Leitwand 45, in Richtung zur Öl-Aufnahmeöffnung 41 strömen kann, wie dies in Fig. 1 durch die Pfeile X1 angedeutet ist.

Wie Fig. 1 zeigt, ist die Öl-Leitwand 45 an ihrem freien Ende 45a mit einem abgewinkelten Abschnitt 45b versehen, um eine möglichst große Ölfläche erfassen zu können. Der Anlenkungsbereich der Öl-Leitwand 45 an der Öl-Leitklappe 43 ist bei 46 angedeutet (Fig.3).

Der Separationsraum 30 nimmt die Einrichtung 31 zur Separation des einströmenden Öl-Wasser-Gemisches auf, wobei die Anordnung dieser Einrichtung 31 derart ist, daß das Öl-Wasser-Gemisch durch die Aufnahmeöffnung 41 in eine dahinterliegende Öl-Einlaufkammer 32 einströmen kann (Fig.2) An diese Öl-Einlaufkammer 32 schließt sich dann ein Labyrinth von Trenn- und Führungswänden an, durch die das Öl-Wasser-Gemisch mittels Pumpen hindurchbefördert wird, wobei in den einzelnen durchströmten Kammern dann in an sich bekannter Weise die Trennung von Öl und Wasser erfolgt. Das abgetrennte Öl wird in Ladetanks befördert, während das abgetrennte Wasser über einen bei 33 angedeuteten Wasseraustrittsstutzen nach außenbords gegeben wird. Jedoch auch andersartige, in an sich bekananter Weise ausgebildete Separationseinrichtungen können in dem Separationsraum 30 der Einrichtung 100 untergebracht sein.

Die Beobachtung der Aufnahme- bzw. Einström- bzw. Eintrittsöffnung 41 erfolgt von Steuerständen, die auf ein- und ausschwenkbaren Steuerplattformen 50 angeordnet sind (Fig.1). Diese Steuerplattformen 50 sind in den Innenraum des Schiffskörpers einschwenkbar und aus dessen Innenraum auch ausschwenkbar angeordnet, jedoch besteht auch die Möglichkeit, diese ein- und ausschwenkbare Steuerplattformen 50, die zu beiden Seiten des Schiffskörpers vorgesehen sind, oberhalb der Einrichtung 100 anzuordnen, jedoch können diese Steuerplattformen 50 eine Einheit mit dem Schiffskörper bilden.

Der obere Raum 20 der Einrichtung 100 dient zur Aufnahme der Öl-Leitwände 45, die mit den Öl-Leitklappen 43 lösbar verbindbar sind, um von den Leitklappen 43 abgenommen werden zu können. Die Übernahme der Öl-Leitwände 45 bei Nichtinbetriebnahme der Einrichtung 100 in den wannenförmigen Aufnahmeraum 20 erfolgt mittels eines decksseitig vorgesehenen Kranes. Dadurch, daß die ölverschmutzten Leitwände 45 in den wannenförmigen Aufnahmeraum 20 des Raumkörpers der Einrichtung 100 untergebracht werden, ist jegliche Verschmutzung des Decks des Schiffskörpers vermeidbar. Sich in dem Aufnahmeraum 20 ansammelndes Öl wird mittels einer in der Zeichnung nicht dargestellten Lenzeinrichtung in die Öl-Einlaufkammer 32 der Separationseinrichtung 31 in dem Separationsraum 30 gefördert, so daß der Aufnahmeraum 20 die Aufgabe einer Tropfwanne hat.

Schiffe, die mit der Einrichtung 100 und der Leitwand 40 bzw. 45 versehen sind, sind in der Lage, als Ölbekämpfungs-Fahrzeuge eingesetzt zu werden und auch im Katastrophenfall sich selbst zu helfen, insbesondere dann, wenn ein Tanker derart ausgebildet ist.

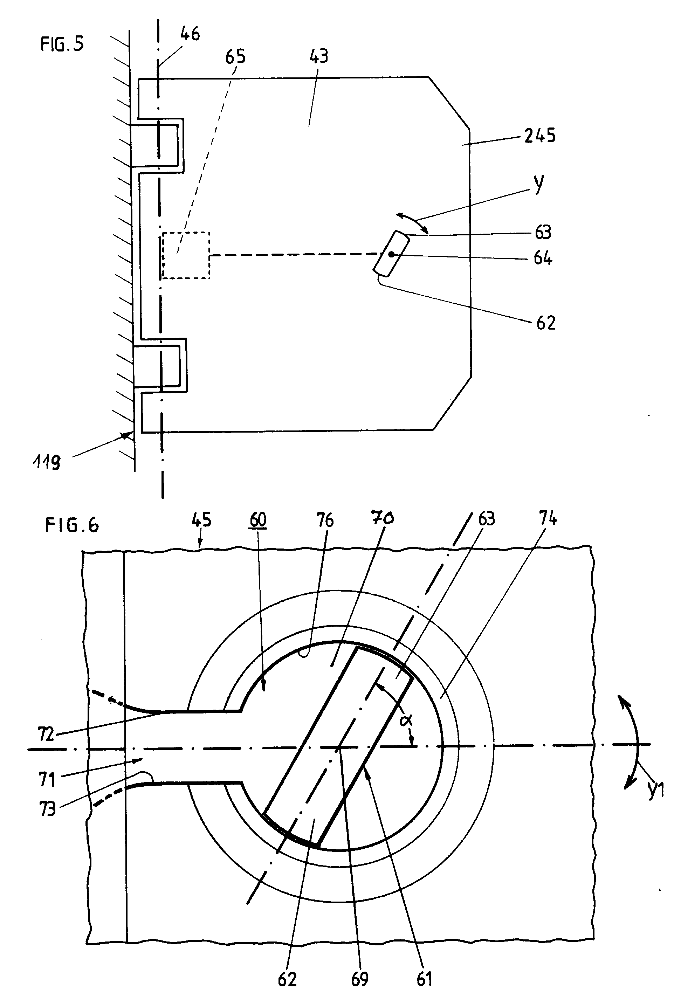

Die Befestigung der Leitwand 45 an der Leitklappe 43 erfolgt mittels einer lösbaren Verbindungsvorrichtung 60, die so ausgebildet ist, daß auf der einen Seite ein schneller Anschluß der Leitwand 45 an der Leitklappe 43 gewährleistet ist und andererseits keine zusätzlichen Verriegelungselemente benötigt werden. Hierzu weist gem. Fig. 3 und 4 jede Leitwand 45 an ihrem der Leitklappe 43 zugekehrten Ende einen doppelwandig ausgebildeten Anschlußabschnitt 201 auf. Die beiden Wände dieses doppelwandigen Anschlußabschnittes 201 sind mit 202,203 bezeichnet und weisen einen Abstand voneinander auf, der der Stärke, d.h. der Dicke der Leitklappe 43 entspricht, so daß bei an die Leitklappe 43 angesetzter Leitwand 45 die seitlichen Wandflächen 43a, 43b der Leitklappe 43 abschnittsweise übergriffen werden (Fig.4 und 7). Die vorderen Wandkanten der beiden Wände 202,203 des Anschlußabschnittes 201 der Leitwand 45 sind mit 202a,203a bezeichnet.

Die die Leitwand 45 mit der Leitklappe 43 verbindende Vorrichtung 60 besteht aus zwei stabformigen und an der Leitklappe 43 angeordneten Verriegelungsnocken 61 und aus Durchbrechungen 70 in der Wand 202 oder in den beiden Wänden 202,203 des Anschlußabschnittes 201 der Leitwand 45.

An der Seitenwand 43a oder an den Seitenwänden 43a und 43b der Leitklappe 43 ist mindestens ein Verriegelungsnocken 61, und zwar benachbart zu der der Leitwand 45 zugekehrten Kante 245 der Leitklappe 43,angeordnet. Von den beiden Verriegelungsnocken 61 an den beiden Leitklappenseitenwänden 43a,43b ist in den Zeichnungen nur ein Verriegelungsnocken sichtbar dargestellt. Die beiden Verriegelungsnocken sind gleich ausgebildet.

Jeder Verriegelungsnocken besteht aus einem stabförmigen, einen quadratischen oder rechteckförmigen Querschnitt aufweisenden Formkörper, dessen beide Enden 62,63 kreisbogenförmig verlaufend ausgebildet sind.

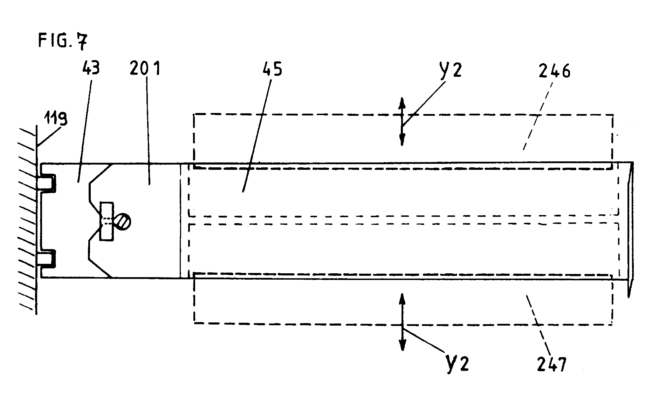

Die beiden Verriegelungsnocken 61 sind, wie in Fig. 5 und 6 dargestellt, in einem Winkel zur Waagerechten der Leitklappe 43 angeordnet. Beide Verriegelungsnocken 61 nehmen die gleiche Winkelstellung ein, aufgrund der das Ende 63 der Verriegelungsnocken 61 gegenüber dem anderen Ende 62 eine höher gelegene Position einnimmt. Die Winkelstellung der Verriegelungsnocken 61 ist in Fig. 6 bei α angedeutet. Um die Winkelstellung der beiden Verriegelungsnocken 61, falls erforderlich, verändern zu können, sind die beiden Verriegelungsnocken 61 mittels waagerechter Schwenkachsen 64 an der Leitklappe 43 angeordnet, so daß zur Veränderung der Winkelstellung die Verriegelungsnocken 61 in Pfeilrichtung Y verstellbar sind. Das Verstellen der Verriegelungsnocken 61 erfolgt mittels einer hydraulisch,pneumatisch oder elektromotorisch angetriebenen Antriebsvorrichtung, die in Fig. 5 bei 65 angedeutet ist. Die Verstellbarkeit der beiden Verriegelungsnocken 61 ist derart, daß beide Verriegelungsnocken 61 gemeinsam in die jeweils gewünschte Winkelstellung überführbar sind.

Um die Leitwand 45 mit der Leitklappe 43 vermittels der Verriegelungsnocken 61 verriegeln zu können, werden die Verriegelungsnocken 61 in die Aufnahmedurchbrechungen 70 in den beiden Wänden 202,203 der Leitwand 45 eingeführt.

Die in den beiden Wänden 202,203 der Leitwand 45 ausgebildeten Verriegelungsnockenaufnahmedurchbrechungen 70 sind gleich ausgebildet und fluchten miteinander.

Jede der beiden Verriegelungsnockenaufnahmedurchbrechungen 70 , von denen in den Fig. 3 bis 6 nur eine der beiden Aufnahmedurchbrechungen dargestellt ist, weist eine Kreisform auf. Jede Wand 202 bzw. 203 der Leitwand 45 ist in dem die Aufnahmedurchbrechungen 70 begrenzenden Randbereich 74 verstärkt, d.h. z.B. wulstartig ausgebildet. Die Länge der beiden Verriegelungsnocken 61 entspricht in etwa dem Innendurchmesser der beiden Aufnahmedurchbrechungen 70, so daß bei einem Verschwenken des freien Endes der Leitwand 45 in Pfeilrichtung Y1 die beiden Verriegelungsnocken 61 mit ihren Endbereichen 62,63 an der Innenwandfläche 76 einer jeden Aufnahmedurchbrechung 70 entlanggleiten können, wobei die Wandfläche 76 die Aufnahmedurchbrechung 70 begrenzt. Um eine einwandfreie Führung eines jeden Verriegelungsnockens 61 an der Innenwandfläche 76 einer jeden Aufnahmedurchbrechung 70 zu gewährleisten, sind die beiden Enden 62,63 eines jeden Verriegelungsnockens 61 kreisbogenförmig verlaufend ausgebildet, wobei sich die beiden kreisbogenförmigen Endabschnitte des Verriegelungsnockens 61 zu einem gedachten Kreis ergänzen, dessen Durchmesser geringfügig kleiner bemessen ist als der Innendurchmesser der Aufnahmedurchbrechungen 70 für die Verriegelungsnocken 61. Um eine gleitende Reibung zwischen den Verriegelungsnocken 61 und den Innenwandflächen 76 der beiden Verriegelungsnockenaufnahmedurchbrechungen70 zu vermeiden, kann jeder Verriegelungsnocken 61 im Bereich seiner beiden Enden 62,63 in der Zeichnung nicht dargestellte Rollen oder Walzen tragen, die freifliegend angeordnet sind und die an der Innenwandfläche 76 einer jeden Aufnahmedurchbrechung 70 abrollen, wenn die Leitwand 45 in Pfeilrichtung Y1 verschwenkt wird.

Um die Verriegelungsnocken 61 in die Aufnahmedurchbrechungen 70 einführen zu können, steht jede Aufnahmedurchbrechung 70 mit der Außenkante 202a der Wand 202 bzw. 203a der Wand 203 des doppelwandigen Anschlußabschnittes 201 der Leitwand 45 über eine schlitzförmige Durchbrechung 71 in Verbindung, die bei waagerechter Stellung der Leitwand 45 waagerecht verlaufend ist, wie dies aus den Fig. 3 und 6 zu entnehmen ist. Auch entsprechend der Darstellung der Verriegelungsnockenaufnahmedurchbrechungen 70 ist in der Zeichnung nur eine der beiden schlitzförmigen Durchbrechungen 71 sichtbar dargestellt. Jede der beiden schlitzförmigen Durchbrechungen 71 wird von einer oberen Wandfläche 72 und einer unteren Wandfläche 73 begrenzt. Die Höhe jeder schlitzförmigen Durchbrechung 71 ist etwas größer bemessen als die Höhe eines jeden Verriegelungsnockens 61, so daß die Verriegelungsnocken 61 in die schlitzförmigen Durchbrechungen 71 der beiden Verriegelungsnockenaufnahmedurchbrechungen 70 einführbar sind, wenn die Leitwand 45 eine angehobene oder abgesenkte Stellung derart einnimmt, daß die schlitzförmigen Durchbrechungen 71 zur Längsrichtung der Verriegelungsnocken 61 parallel verlaufend sind, d.h. die Verriegelungsnocken 61 fluchten mit den schlitzförmigen Durchbrechungen 71, so daß dann ein einwandfreies Einführen der Verriegelungsnocken 61 in die Verriegelungsnockenaufnahmedurchbrechungen 70 möglich ist. Wird dann aus der angehobenen bzw. abgewinkelten Stellung die Leitwand 45 in ihre waagerechte Stellung überführt, dann nehmen die Verriegelungsnocken 61 in den Verriegelungsnockenaufnahmedurchbrechungen 70 die in Fig. 6 gezeigte Verriegelungsstellung ein; ein selbständiges Lösen der Verbindungsvorrichtung 60 ist nicht möglich, sondern nur dann, wenn die Leitwand 45 mit ihrem freien Ende soweit angehoben oder abgewinkelt werden sollte, daß die schlitzförmigen Durchbrechungen 71 mit den Verriegelungsnocken 61 fluchten. Da jedoch die beiden Verriegelungsnocken 61 eine vorgegebene Winkelstellung (Winkel $\alpha$ ) einnehmen, wird eine Entriegelungsstellung der Leitwand 45 niemals erreicht werden, da bei Betrieb der Schiffskörper, d.h.bei Betrieb der Leitwand 45, dieser auch bei noch so stürmischer See oder hohem Wellengang nicht in eine Winkelstellung überführbar ist, die ein selbsttätiges Entriegeln ermöglicht.

Um das Einführen der Verriegelungsnocken 61 in die schlitzförmigen Durchbrechungen 71 der Verriegelungsnockenaufnahmedurchbrechungen 70 zu erleichtern, weisen die schlitzförmigen Durchbrechungen 71 Verriegelungsnocken im Bereich der Einführöffnung für den Verriegelungsnocken konisch sich nach außen erweiternde Gleitflächen,die bei 77 und 78 in Fig 3 angedeutet sind,auf. Dadurch ist es möglich, die z.B. mittels einer Hebeeinrichtung gehaltene und angehobene Leitwand 45 mühelos dadurch mit der Leitklappe 43 verriegeln zu können, indem die Leitwand 45 in eine Winkelstellung gebracht wird, bei der die schlitzförmigen Durchbrechungen 71 der beiden Verriegelungsnockenaufnahmedurchbrechungen 70 mit den Verriegelungsnocken 61 fluchten, die fest an den beiden Seitenwänden 43a,43b der Leitklappe 43 befestigt sind; sind die beiden Verriegelungsnocken 61 in ihren Winkelstellungen veränderbar, dann erfolgt ein Feststellen der Verriegelungsnocken in der jeweiligen geforderten und gewünschten Winkelstellung, so daß für die Herstellung der Verbindung zwischen der Leitwand 45 und der Leitklappe 43 ein Verschwenken der Verriegelungsnocken 61 nicht mehr möglich ist, und zwar auch dann nicht, wenn die Verbindung hergestellt worden ist Das Feststellen der Verriegelungsnocken 61 kann über die Antriebsvorrichtung 65 erfolgen, wenn keine gesonderten Feststelleinrichtungen, wie z.B. Verriegelungsbolzen od dgl., vorgesehen sind.

Aufgrund einer derart ausgebildeten Verbindungsvorrichtung 60 ist die Leitwand 45 in Bezug auf ihr freies Ende höhenveränderbar, d.h. die Leitwand 45 ist in ihrem Anlenkungspunkt mit der Leitklappe 43 um die bei 69 in Fig. 6 angedeutete Achse verschwenkbar.

Nach einer weiteren Ausführungsform ist die Leitwand 45 doppelwandig ausgebildet. Um die Leitwandfläche, falls erforderlich, vergrößern zu können, weist die Leitwand 45 obenseitig und/oder untenseitig einen sich über die gesamte Länge der Leitwand erstreckenden Wandabschnitt 246 bzw. 247 auf. Mittels einer in der Zeichnung nicht dargestellten hydraulisch,pneumatisch oder elektromotorisch betriebenen Antriebsvorrichtung ist jeder Wandabschnitt 246 bzw. 247 in Pfeilrichtung Y2 ein- und ausfahrbar. Darüber hinaus besteht auch die Möglichkeit, die Leitwand 45 so auszubilden, daß die Leitwand im Anschlußbereich der Leitklappe 43 gegenüber ihrem Endbereich eine größere Höhe aufweist. Aufgrund dieser Ausgestaltung ist sichergestellt, daß bei erhöhtem Wellengang und stürmischer See sowie bei einer rollenden Bewegung des Schiffes die Leitwand 45 immer eine in das Wasser mit einem Abschnitt eingetauchte Stellung aufweist, so daß auch bei stürmischer See auf der Wasseroberfläche schwimmendes Öl vermittels der Leitwand 45 sicher der Ansaugöffnung 41 in der Schiffsaußenhaut zugeleitet wird.

Die senkrechtstehende Leitwand 45 ist vorzugsweise an einem Rahmentragwerk befestigt, um eine leichte Bauweise zu erhalten. Außerdem kann die Leitwand 45 als Schwimmkörper ausgebildet sein. Es besteht auch die Möglichkeit, die Leitwand 45 mit mindestens einem Auftriebskörper 249 zu versehen, der vorzugsweise im Bereich des freien Endes der Leitwand 45 angeordnet ist.

Fig. 3 zeigt die mittels der Verbindungsvorrichtung 60 an eine Leitklappe 43 angeschlossene Leitwand 45, und zwar in der mit A gekennzeichneten Betriebsstellung. Für den Anschluß der Leitwand 45 an die Leitklappe 43 muß die Leitwand in eine Winkelstellung überführt werden, die bei B angedeutet ist. Nach dem Einführen der Verriegelungsnocken 61 in die Verriegelungsnockenaufnahmedurchbrechungen 70 wird dann die Leitwand 45 von der Verriegelungsstellung B in die Betriebsstellung A abgesenkt. Die Länge der Leitklappe 43 ist so bemessen, daß ein müheloses Verriegeln gewährleistet ist. Die Länge des Schlitzes, der zwischen den beiden Wänden 202,203 des doppelwandigen Anschlußabschnittes 201 der Leitwand 45 ausgebildet ist, ist so bemessen, daß ein Verschwenken der Leitwand 45 um die Verriegelungsachse 69 gewährleistet ist. Die Leitklappe 43 selbst ist an der Außenwand des Schiffskörpers bzw. an der Außenwand im Bereich der Einrichtung 100 so angelenkt, daß ein Verschwenken der Leitklappe 43 um die bei 46 in Fig. 3 angedeutete senkrechte Schwenkachse möglich ist.

Um beim Einführen der Verriegelungsnocken 61 in die zu den schlitzförmigen Durchbrechungen 70 führenden konisch sich zu den Durchbrechungen 70 verjüngenden Einführöffnungen 79 zu verhindern, daß die Verriegelungsnocken 61 seitlich aus den Einführöffnungen 79 herausgleiten, können die Einführöffnungen 79 auf den den Außenwandflächen der Wände 202,203 liegenden Seiten abschnittsweise mittels Begrenzungsplatten o.d. dgl. 209 verschlossen werden (Fig.3).

Die Leitklappe 43 mit der Leitwand 45 und der beide Teile miteinander verbindenden Vorrichtung 60 brauchen nicht im Bereich der Einrichtung 100 angebracht zu sein. Überall, wo in der Außenhaut eines Schiffes Ansaugöffnungen für das aufzunehmende Öl-Wasser-Gemisch vorgesehen sind, ist eine Leitklappe mit der Leitwand einsetzbar, um das auf der Wasseroberfläche schwimmende Öl in den Bereich der Ansaugöffnung zu leiten. Sind die Verriegelungsnocken 61 schwenkbar, dann kann das Verriegeln mit der Leitwand 45 auch in waagerechter Stellung der Verriegelungsnocken und der Leitwand erfolgen. Zum Verriegeln werden die Nocken verdreht.

Während bei dem vorangehend beschriebenen Ausführungsbeispiel zwei Verriegelungsnocken 61 vorgesehen sind, wobei auf jeder Leitklappenseitenwand 43a,43b ein Verriegelungsnocken angeordnet ist, besteht auch die Möglichkeit, nur einen einzigen Verriegelungsnocken vorzusehen, der dann nur an einer der beiden Leitklappenseitenwände 43a,43b vorgesehen ist. Daneben kann auch jede Leitklappenseitenwand mehr als einen Verriegelungsnocken tragen. Die Anzahl der Verriegelungsnockenaufnahmedurchbrechungen 70 an der Leitwand 45 richtet sich dann jeweils nach der Anzahl der vorgesehenen Verriegelungsnocken 61, die alle gleich ausgebildet sind und alle die gleichen Winkelstellungen aufweisen.

## Patentansprüche

1. Schiff zur Bekämpfung von Öl-Verschmutzungen mit Einrichtungen zum Aufnehmen von auf Wasser schwimmendem Öl und zur Trennung von Öl und Wasser des aufgenommenen Öl-Wasser-Gemisches, wobei in der Schiffsaußenhaut des Schiffskörpers mindestens eine Aufnahmeöffnung für das Öl-Wasser-Gemisch ausgebildet ist, die mit den im Schiffskörper angeordneten Einrichtungen zum Trennen des Öl-WasserGemisches verbunden ist,
dadurch gekennzeichnet,
daß im Bereich einer jeden Aufnahme- bzw. Einströmöffnung (41) in der Schiffsaußenhaut eine um eine senkrechte Achse (46) verschwenkbare Leitklappe (43) angeordnet ist die über eine Verbindungsvorrichtung (60) mit einer Leitwand (45) verbunden ist, wobei jede Leitwand (45) an ihrem der Leitklappe (43) zugekehrten Ende einen doppelwandig ausgebildeten Anschlußabschnitt (201) aufweist, dessen beiden Wände (202,203) einen Abstand voneinander aufweisen, der der Stärke der Leitklappe (43) entspricht, und bei an die Leitklappe (43) angesetzter Leitwand (45) die seitlichen Wandflächen (43a,43b) der Leitklappe (43) abschnittsweise übergreifen, und mit der Leitklappe (43) über eine lösbare Verbindungsvorrichtung (60) verbunden ist, die aus mindestens einem, z.B. zwei stabförmigen, einen quadratischen oder rechteckförmigen Querschnitt aufweisenden und endseitig abgerundeten Verriegelungsnocken (61), von denen jeder Verriegelungsnocken (61) an der Außenfläche einer jeden Leitklappenseitenwand (43a,43b) und zur senkrechten Außenkante (245) der Leitklappe (43) ansteigend angeordnet ist, und die aus in den beiden Wänden (202,203) des doppelwandigen Anschlußabschnittes (201) ausgebildeten und miteinander fluchtenden kreisförmigen Verriegelungsnockenaufnahmedurchbrechungen (70) besteht, deren Innendurchmesser der Länge der Verriegelungsnocken (61) entspricht und die über schlitzförmige, waagerecht verlaufende Durchbrechungen (71) mit einer der Höhe der Verriegelungsnocken (61) entsprechenden Höhe mit den Vorderkanten (202a,203a) der beiden Wände (202,203) des Anschlußabschnittes (201) der Leitklappe (43) verbunden sind bzw. in die Vorderkanten übergehen, so daß für den Anschluß der Leitwand (45) an die Leitklappe (43) die Leitwand (45) in eine der Winkelstellung der Verriegelungsnocken (61) entsprechende Winkelstellung durch Anheben des freien Endes der Leitwand (45) überführbar ist, wobei die mit der Leitklappe (43) verriegelte Leitwand (45) um den Mittelpunkt der Verriegelungsnockenaufnahmedurchbrechungen (70) verschwenkbar ist und wobei die Anzahl der Verriegelungsnockenaufnahmedurchbrechungen(70) der Anzahl der Verriegelungsnocken (61) entspricht und die Verriegelungsnockenaufnahmedurchbrechungen (70) an der Leitwand (45) entsprechend der Anordnung der Verriegelungsnocken (61) diesen zugeordnet sind.

2. Schiff nach Anspruch 1,
dadurch gekennzeichnet,
daß jede schlitzförmige, mit der Verriegelungsnockenaufnahmedurchbrechung (70) verbundene Durchbrechung (71) zum Einführen des Verriegelungsnockens (61) von einer oberen Wandfläche (72) und einer unteren Wandfläche (73) begrenzt wird, wobei die beiden Wandflächen (72,73) als konisch sich zu der Vorderkante (202a,203a) der Wände (202,203) der Leitwand (45) erweiternde Gleitflächen ausgebildet sind.

3. Schiff nach Anspruch 1 und 2,
dadurch gekennzeichnet,
daß jeder Verriegelungsnocken (61) an seinen Enden kreisbogenförmig abgerundet ausgebildet ist, wobei sich die beiden kreisbogenförmigen Endabschnitte (62,63) zu einem Kreis ergänzen, dessen Durchmesser dem Durchmesser der Verriegelungsnockenaufnahmedurchbrechungen (70) entspricht.

4. Schiff nach Anspruch 1 bis 3,
dadurch gekennzeichnet,,
daß jeder Verriegelungsnocken (61) an der Seitenwand (43a,43b) der Leitklappe (43) um eine waagerechte Achse (64) verschwenkbar angeordnet und mittels einer hydraulisch, pneumatisch oder elektromotorisch betriebenen Antriebsvorrichtung (65) in verschiedene Winkelstellungen verstellbar und in den eingestellten Winkelstellungen mittels Feststelleinrichtungen arretierbar ist.

5. Schiff nach einem der vorangegangenen Ansprüche 1 bis 4,
dadurch gekennzeichnet,
daß die Leitwand (45) doppelwandig ausgebildet und obenseitig und/oder untenseitig mit einem mittels einer hydraulisch, pneumatisch oder elektromotorisch betriebenen Antriebsvorrichtung ein- und ausfahrbaren, sich über die gesamte Länge der Leitwand (45) erstreckenden Wandabschnitt (246,247) versehen ist.

6. Schiff nach einem der vorangegangenen Ansprüche 1 bis 5,
dadurch gekennzeichnet,
daß die Leitwand (45) im Anschlußbereich der Leitklappe (43) gegenüber ihrem Endbereich eine größere Höhe aufweist.

7. Schiff nach einem der vorangegangenen Ansprüche 1 bis 6,
dadurch gekennzeichnet,
daß die Leitwand (45) als Schwimmkörper ausgebildet ist.

8. Schiff nach einem der vorangegangenen Ansprüche 1 bis 7,
dadurch gekennzeichnet,
daß die Leitwand (45) mit mindestens einem Auftriebskörper (249) versehen ist.

9. Schiff nach Anspruch 8,
dadurch gekennzeichnet,
daß die Leitwand (45) mit einem Auftriebskörper (249) an ihrem freien Ende versehen ist.

**Claims**

1. Ship for fighting oil pollution with means for collecting the oil floating on the water and for separating the oil and the water of the collected oil-and-water mixture, wherein, in the ship's outer hull plating, at least one receiving aperture for the oil-and-water mixture is constructed which communicates with the means for the separation of the oil-and-water mixture that is mounted inside the hull,
characterized in that,
within the area of each receiving or inlet aperture (41) in the ship's outer hull plating, a guide vane (43) which can be swivelled about a vertical axis is disposed, which is connected to a baffle (45) with the aid of a connecting means (60), in which each baffle (45), at its end which faces the guide vane (43), is provided with a connecting section (201) constructed so as to be double-walled, the two walls (202,203) of which are spaced apart from each other by a distance that corresponds to the thickness of the guide vane (43) and which, with the baffle (45) mounted on the guide vane (43), engage over the side wall areas (43a,43b) of the guide vane (43) in sections, and which is connected to the guide vane (43) with the aid of a detachable connecting means (60) which comprises at least one locking cam (61) e.g. two rod-shaped ones, having a square or rectangular cross-section which is rounded off at the end, of which each locking cam (61), on the outer surface of each guide vane side wall (43a,43b) and relative to the vertical outer edge (245) of the guide vane (43), is ascendingly disposed, and which comprises the circular and mutually aligned locking cam receiving perforation (70) which is constructed in the two walls (202,203) of the double-walled section, the internal diameter of which corresponds to the length of the locking cams (61) and which, by means of slot-shaped, horizontally proceeding perforations (71), at a level corresponding to the level of the locking cams (61), are connected to the front edges (202a,203a) of the two walls (202,203) of the connecting section (201) of the guide vane (43) or which pass into the front edges, respectively, so that, for the connection of the baffle (45) to the guide vane (43), the baffle (45) can be transferred into an angular position that corresponds to the angular position of the locking cams (61) by raising the free end of the baffle (45), while the baffle (45) locked to the guide vane (43) is swivellable about the center point of the locking cam receiving perforations (70) and in which the number of the locking cam receiving perforations (70) corresponds to the number of the locking cams (61) and the locking cam receiving perforations (70) on the baffle (45), in conformity with the disposition of the locking cams (61), are allocated to the latter.

2. Ship according to Claim 1, characterized in that each slot-shaped perforation (71) communicating with the locking cam receiving perforation (70), for the purpose of inserting the locking cam (61), is delimited by an upper wall area (72) and a lower wall area (73), while the two wall areas (72,73) are constructed in the form of gliding surfaces expanding conically relative to the front edges (202a,203a) of the walls (202,203) of the baffle (45).

3. Ship according to Claims 1 and 2, characterized in that each locking cam (61), at its ends, is constructed so as to be rounded off in the form of a circular arc, while the two circularly arcuate terminal sections (62,63) complement each other so as to form a circle, the diameter of which corresponds to the diameter of the locking cam receiving perforations (70).

4. Ship according to Claims 1 to 3, characterized in that each locking cam (61) is disposed so as to be swivellable about a horizontal axis on the side wall (43a,43b) of the baffle (43) and, with the aid of a hydraulically, pneumatically or electromotively operated driving means (65), is adjustable into various angular positions and can be secured in the set angular positions with the aid of a locking means.

5. Ship accprding to the preceding Claims 1 to 4, characterized in that the baffle (45) is constructed so as to be double-walled and, on the top side and/or on the bottom side, is provided with a wall section (246,247) extending over the entire length of the baffle (45) which can be made to travel inwardly or outwardly with the aid of a hydraulically, pneumatically or electromotively operated driving means (65).

6. Ship according to any of the preceding Claims 1 to 5, characterized in that the baffle (45), within the connecting area of the guide vane (43), in comparison with its terminal area, possesses a greater height.

7. Ship according to any of the preceding Claims 1 to 6, characterized in that the baffle (45) is constructed in the form of a floating body.

8. Ship according to any of the preceding Claims 1 to 7, characterized in that the baffle (45) is provided with at least one buoyant body (249).

9. Ship according to Claim 8, characterized in that the baffle (45), on its free end, is provided with a buoyant body.

**Revendications**

1. Navire de lutte contre la pollution d'huile avec des dispositifs pour absorber de l'huile qui flotte sur l'eau et pour séparer l'huile et l'eau du mélange eau-huile absorbé, au moins une ouverture d'absorption du mélange eau-huile étant configurée dans le bordé extérieur de la coque, ouverture qui est reliée aux dispositifs pour la séparation du mélange eau-huile qui sont placés dans la coque,
**caractérisé en ce**
qu'un clapet directeur (43) pivotant autour d'un axe vertical (46) est placé dans la zone de chaque ouverture d'absorption ou d'afflux (41) dans le bordé extérieur, clapet qui est relié par un dispositif de raccord (60) à une paroi de guidage (45), chaque paroi de guidage (45) présentant, à son extrémité détournée du clapet directeur (43), une portion de raccord (201) configurée à double paroi, portion dont les deux parois (202, 203) présentent un écart l'une par rapport à l'autre qui correspond à l'épaisseur du clapet directeur (43) et qui, lorsque la paroi de guidage (45) est posée contre le clapet directeur (43), recouvrent par portions les surfaces de paroi latérales (43a, 43b) du clapet directeur (43), chaque paroi étant reliée au clapet directeur (43) par un dispositif de raccord amovible (60) qui est constitué par au moins un et, par exemple, deux ergots de verrouillage (61) en forme de barre, arrondis aux extrémités et qui présentent une section carrée ou rectangulaire, chacun des ergots de verrouillage (61) étant placé sur la face extérieure de chacune des parois latérales du clapet directeur (43a, 43b) et en montant vers le bord extérieur vertical (245) du clapet directeur (43) et par des découpures circulaires pour le logement des ergots de verrouillage (70) configurées dans les deux parois (203, 203) de la portion de raccord à double paroi (201) et alignées l'une sur l'autre, découpures dont le diamètre intérieur correspond à la longueur des ergots de verrouillage (61) et qui sont reliées par des découpures horizontales en forme de fente (71) de hauteur correspondant à la hauteur des ergots de verrouillage (61) aux arêtes antérieures (202a, 203a) des deux parois (202, 203) de la paroi de raccord (201) du clapet directeur (43) ou qui se poursuivent dans les arêtes antérieures si bien que, pour le raccord de la paroi de guidage (45) au clapet directeur (43), la paroi de guidage (45) peut être amenée en une position angulaire correspondant à la position angulaire des ergots de verrouillage (61) en soulevant l'extrémité libre de la paroi de guidage (45), la paroi de guidage (45) verrouillée avec le clapet directeur (43) pouvant pivoter autour du centre des découpures de logement des ergots de verrouillage (70), le nombre des découpures de logement des ergots de verrouillage (70) correspondant au nombre des ergots de verrouillage (61) et les découpures de logement des ergots de verrouillage (70) sur la paroi de guidage (45) étant affectées aux ergots de verrouillage (61) selon la disposition de ceux-ci.

2. Navire selon la revendication 1,
**caractérisé en ce**
que chaque découpure en forme de fente, reliée à la découpure de logement de l'ergot de verrouillage (70), pour l'introduction de l'ergot de verrouillage (61) est délimitée par une face de paroi supérieure (72) et par une face de paroi inférieure (73), les deux faces de paroi (72, 73) étant configurées comme des surfaces de glissement qui s'élargissent de manière conique vers l'arête antérieure (202a, 203a) des parois (202, 203) de la paroi de guidage (45).

3. Navire selon les revendications 1 et 2,
**caractérisé en ce**
que chaque ergot de verrouillage (61) est configuré en étant arrondi en arc de cercle à ses extrémités, les deux portions terminales en forme d'arc de cercle (62, 63) se complétant en un cercle dont le diamètre correspond au diamètre des découpures de logement des ergots de verrouillage (70).

4. Navire selon les revendications 1 à 3,
   **caractérisé en ce**
   que chaque ergot de verrouillage (61) est placé sur la face latérale (43a, 43b) du clapet
   directeur (43) en étant pivotant autour d'un axe
   horizontal (64), qu'il est réglable dans différentes positions angulaires au moyen d'un dispositif d'entraînement (65) à fonctionnement hydraulique, pneumatique ou électromoteur, et
   qu'il peut être bloqué dans les positions angulaires réglées au moyen de dispositifs de blocage.

5. Navire selon l'une des revendications précédentes 1 à 4,
   **caractérisé en ce**
   que la paroi de guidage (45) est configurée à
   double paroi et qu'elle est pourvue, sur sa face
   supérieure et/ou inférieure d'une portion de
   paroi (246, 247) qui s'étend sur toute la longueur de la paroi de guidage (45) et qui peut
   être entrée et sortie au moyen d'un dispositif
   d'entraînement à fonctionnement hydraulique,
   pneumatique ou électromoteur.

6. Navire selon l'une des revendications précédentes 1 à 5,
   **caractérisé en ce**
   que la paroi de guidage (45) présente une
   hauteur plus importante dans la zone de raccord du clapet directeur (43) que dans la zone
   de ses extrémités.

7. Navire selon l'une des revendications précédentes 1 à 6,
   **caractérisé en ce**
   que la paroi de guidage (45) est configurée
   comme un corps flottant.

8. Navire selon l'une des revendications précédentes 1 à 7,
   **caractérisé en ce**
   que la paroi de guidage (45) est équipée d'au
   moins un flotteur (249).

9. Navire selon la revendication 8,
   **caractérisé en ce**
   que la paroi de guidage (45) est équipée d'un
   flotteur (249) à son extrémité libre.

EP 0 313 102 B1

FIG.1

FIG.2

FIG. 3

FIG. 4

FIG.5

FIG.6

14

FIG. 7